# EUROPEAN PATENT APPLICATION

(11) **EP 3 903 891 A1**
(43) Date of publication of application: **03.11.2021**
(21) Application number: 18944887.1
(22) Date of filing: 26.12.2018
(51) Int. Cl.: A62C 3/16

(54) **FIRE-RESISTANT MEMBER**

(71) Applicant: FURUKAWA ELECTRIC CO., LTD., Chiyoda-ku Tokyo 100-8322 (JP)
(72) Inventor: ANDO, Kazuya, Tokyo 100-8322 (JP); HIDESHIMA, Yu, Tokyo 100-8322 (JP); MISU, Atsuo, Hiratsuka-shi, Kanagawa 254-0016 (JP); NISHIYAMA, Shoichiro, Hiratsuka-shi, Kanagawa 254-0016 (JP); KARUBE, Motoyoshi, Osaka-shi, Osaka 531-0076 (JP)
(74) Representative: Goddar, Heinz J.
(86) International application number: PCT/JP2018/047717
(87) International publication number: WO 2020/136736

(57) **Abstract**

A thermally expandable member housing (17) is formed on an inner surface side of a main body portion (3). An inner diameter of the thermally expandable member housing (17) is slightly larger than thicknesses of other parts of an inner periphery surface of the main body portion (3), and the thermally expandable member housing (17) is formed over an entire circumference of the inner surface of the main body portion (3). The thermally expandable member housing (17) accommodates a thermally expandable member (5), which expands due to heat from a fire or the like, and a metal member (2). The metal member (2) is made of aluminum, for example. The metal member (2) is disposed between the main body portion (3) (the thermally expandable member housing (17)) and the thermally expandable member (5). That is, the metal member (2) is disposed on an outer surface side of the thermally expandable member (5). It is unnecessary for the metal member (2) to cover an entire outer surface of the thermally expandable member (5), and the metal member (2) may be disposed on at least a part of an outer periphery side of the thermally expandable member (5).

## Description

### TECHNICAL FIELD OF THE INVENTION

The present invention relates to a firestopping member that provides firestopping ability to a penetrating part, such as pipes and cables, passing through a partitioning part.

### BACKGROUND OF THE INVENTION

In buildings and the like, there are cases in which pipes and cables (hereinafter, simply called as a long body/long bodies) are laid through rooms partitioned by partitioning parts. In such cases, once there is a fire in one room, for example, the fire may spread throughout the entire building travelling along the long bodies, causing severe damage.

As a firestopping structure for such long bodies that penetrate partitioning parts, there is a method in which thermally expandable putty or mortar is filled into gaps between the long bodies and a through hole (Patent Document 1, for example).

Also, there is a method in which a plurality of firestopping materials are disposed at penetrating parts of cables and pipe materials to block the penetrating parts, wherein the firestopping material is a thermally expandable member covered by a covering body (Patent Document 2, for example).

### RELATED ART

### PATENT DOCUMENTS

[Patent Document 1] Japanese Unexamined Patent Application Publication No.1997-262305 (JP-A-1997-262305)
[Patent Document 2] Japanese Unexamined Patent Application Publication No. 2015-19853 (JP-A-2015-19853)

### SUMMARY OF THE INVENTION

### (PROBLEMS TO BE SOLVED BY THE INVENTION)

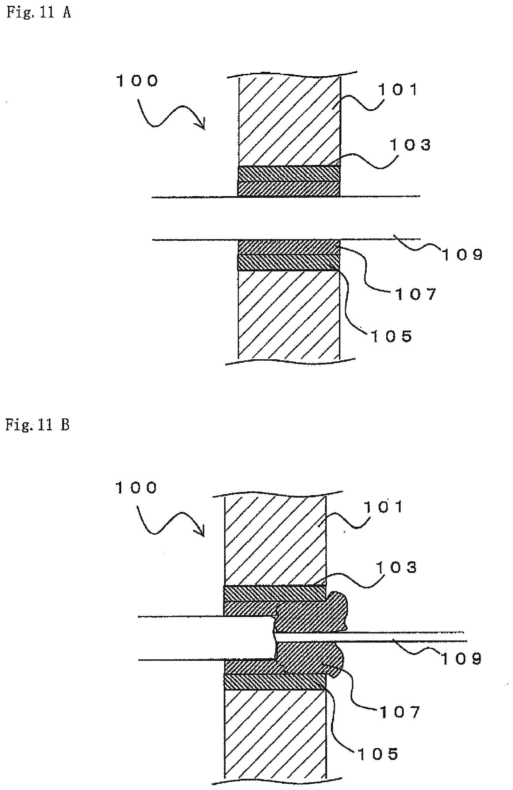

FIG. 11A is a schematic view showing a conventional firestopping structure 100. The firestopping structure 100 is formed for a long body 109 that penetrates a through hole 103 formed in a partitioning portion 101. A thermally expandable body 107 is disposed on an outer periphery of the through hole 103, and a mortar 105 is filled into a gap between the thermally expandable body 107 and an inner surface of the through hole 103.

FIG. 11B is a schematic view showing a state in which a fire occurs in one side of an area partitioned by the partitioning portion 101. The example in FIG. 11B shows a state in which a protective layer part of the long body 109 is burned down and a metal part inside is exposed. When there is a fire, the thermally expandable body 107 expands and blocks a gap between the long body 109 and the through hole 103. This can suppress flame, heat, and smoke of the fire to spread to the other side of the partitioning portion 101.

Here, the thermally expandable body 107 on the side of the fire starts to expand in a short time. However, after a part of the thermally expandable body 107 expands, an insulating part is formed in the through hole. This may interfere with expansion of all the thermally expandable 107 that constitutes the firestopping structure 100, leaving some part of the thermally expandable body 107 unexpanded. In particular, with the thick partitioning portion 101 or large through hole 103 where it is necessary to increase a length and thickness of the thermally expandable body 107 to obtain a desired firestopping performance, the partly unexpanded part of the thermally expandable body 107 is likely to occur.

There should be no problem if a predetermined firestopping performance can be obtained in this state. However, when there is a partial expansion in the thermally expandable body 107, a large force is applied between the unexpanded part and the expanded part and this may cause a part of the expanded part of the thermally expandable body 107 to fall. In particular, the expanded part is likely to fall if the partitioning portion is a floor and the fire occurs on the flower below. Although the remaining unexpanded part starts to expand after the expanded part falls, it is difficult to obtain the originally expected firestopping performance for the firestopping structure 100 when alternate expansion and falling of the thermally expandable body 107 are repeated with such a time lag.

On the other hand, it is possible to cover the thermally expandable body 107 using a cover to improve handling performance of the thermally expandable body 107 and to prevent falling of the thermally expandable member as in Patent Document. However, covering the thermally expandable body 107 with a cover interferes with the expansion of the thermally expandable body 107. Thus, a firestopping member that excels in handling performance, suppresses time-lagged expansion of a thermally expandable body, and provides a desirable firestopping performance has been demanded.

The present invention was made in view of such problems. Its object is to provide a firestopping member that can provide excellent workability and firestopping performance.

### (MEANS FOR SOLVING PROBLEMS)

To achieve the above object, the present invention is a firestopping member including a substantially cylindrical main body portion, a thermally expandable member provided on an inner surface of the main body portion, and an elastic body provided on inner periphery surfaces of the main body portion and the thermally expandable member so as to spread over the thermally expandable member. A heat conductive portion is formed at least on a part of an outer periphery side of the thermally expandable member.

The heat conductive portion may be a metal member, and the metal member may be disposed between the main body portion and the thermally expandable member.

The metal member may be disposed only on an outer surface side of the thermally expandable member and may be disposed continuously as one body in an axial direction and in a circumferential direction of the main body portion.

The heat conductive portion may be a slit, and the slit may be formed at a part of the main body portion, which is an outer periphery part of the thermally expandable member.

A plurality of deformable tongue-shaped pieces may be provided in proximity of one end portion of the main body portion. The tongue-shaped pieces are provided at positions shifted from the end portion of the main body portion, directing from the inner surface of the main body portion toward a center direction. A thickness of the main body portion between forming positions of the tongue-shaped pieces and the one end portion of the main body portion may be larger than the thickness of the other parts.

A thermally expandable member housing may be formed over an entire circumference of the inner surface of the main body portion. The thermally expandable member housing may have an inner diameter that is larger than that of the other parts. The thermally expandable member housing accommodates the thermally expandable member, and the tongue-shaped pieces may be formed on one end portion of the thermally expandable member housing.

Preferably, the main body portion is made of rubber, and the elastic body is a sponge.

The present invention excels in workability since a fireproof structure can be obtained without using mortar and the like. Also, an elastic body covers the thermally expandable member, and thus the thermally expandable member is not exposed to the outside, so the thermally expandable member is not likely to receive damage when being handled. Also, since the elastic body can change its form, one same member can be used for different sizes and different number of long bodies that are to be penetrated.

Also, the heat conductive portion is formed on the outer periphery side of the thermally expandable member, and thus the thermally expandable member can almost uniformly expand in a short time. Thus, stable firestopping performance can be obtained. At this time, since the heat conductive portion is provided on the outer periphery side of the thermally expandable member, the heat conductive portion does not interfere with the expansion of the thermally expandable member.

Also, if the heat conductive portion is a metal member, the metal member can conduct heat almost uniformly to the thermally expandable member.

In particular, disposing the metal member only on the outer surface side of the thermally expandable member not only prevents interference with the expansion of the thermally expandable member in an axial direction of the main body portion, for example, but also excels in manufacturability. Also, the metal member is disposed on the outer surface side of the thermally expandable member continuously as one body in an axial direction and in a circumferential direction of the main body portion, and thus heat can be conducted to the entire thermally expandable member almost uniformly in a short time.

For example, if the metal member covers an entire outer periphery of the thermally expandable member, this interferes with the expansion of the thermally expandable member in a center direction or in the axial direction of the main body portion as mentioned above. Also, the expansion of the thermally expandable member may be obstructed if the metal member and the thermally expandable member are stacked as layers inside the thermally expandable member. That is, if the thermally expandable member as a whole is not in one body but is divided into a plurality of parts, the uniform expansion of the thermally expandable member may be obstructed.

Also, if the heat conductive portion is a slit, heat can be conducted to the thermally expandable member through the slit. For example, by forming the slit along the axial direction of the main body portion, the thermally expandable member can be expanded in a short time almost uniformly in the axial direction of the main body portion.

Also, the tongue-shaped pieces provided on the inner surface of the main body portion serve as a screen for the partitioning portion. At this time, making a thickness between forming positions of the tongue-shaped pieces and one end portion of the main body portion larger than the thickness of the other parts can improve rigidity of a base portion of the tongue-shaped pieces. This can decrease an amount of deformation of the base portion of the tongue-shaped pieces at the time of inserting a long body into the main boy portion. This can prevent a bending portion between the tongue-shaped members and the main body portion from stretching greatly so that the base portion of the tongue-shaped pieces does not receive damage.

Also, the thermally expandable member is accommodated inside the thermally expandable member housing, which is formed over the entire circumference of the inner surface of the main body portion. The inner diameter of the thermally expandable member housing is slightly larger than that of the other parts. This can reduce unevenness of the outer surface of the elastic body and can suppress generating gaps between the elastic body and the main body portion as well as the thermally expandable member. Also, the tongue-shaped pieces formed at the end portion of the thermally expandable member housing can restrict the expansion direction at the time of expansion of the thermally expandable member, and thus the thermally expandable member can expand efficiently in the axial center direction.

Also, the main body portion is made of rubber and its elasticity facilitates installation operation onto the through hole. Also, the main body portion is fire-retardant, and thus spread of a fire can be prevented. Similarly, if the elastic body is a fire-retardant sponge, spread of a fire can be prevented.

### (EFFECTS OF THE INVENTION)

The present invention can provide a firestopping member that can provided excellent workability and firestopping performance.

### BRIEF DESCRIPTION OF DRAWINGS

FIG. 1 is an exploded front perspective view showing a firestopping member 1.
FIG. 2 is an assembled rear perspective view showing the firestopping member 1.
FIG. 3 is a cross sectional view of the firestopping member 1.
FIG. 4 is a perspective view showing an elastic body 7.
FIG. 5 is a view showing a construction process of a fireproof structure.
FIG. 6 is a cross sectional view showing a construction process of the fireproof structure.
FIG. 7 is a view showing a construction process of the fireproof structure.
FIG. 8 is a cross sectional view showing a construction process of the fireproof structure.
FIG. 9 is an assembled rear perspective view showing a firestopping member 1a.
FIG. 10 is a cross sectional view of the firestopping member 1a.
FIG. 11A is a cross sectional view showing a conventional firestopping structure 100.
FIG. 11B is a cross sectional view showing a conventional firestopping structure 100.

### DESCRIPTION OF SOME EMBODIMENTS

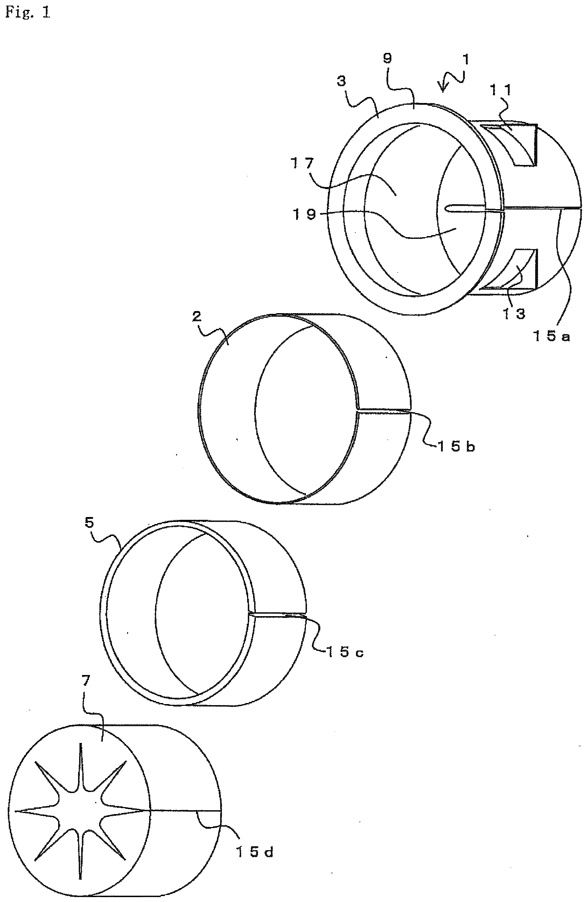

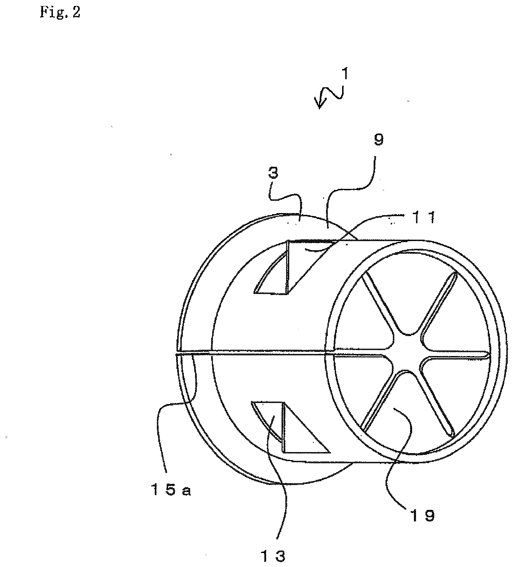

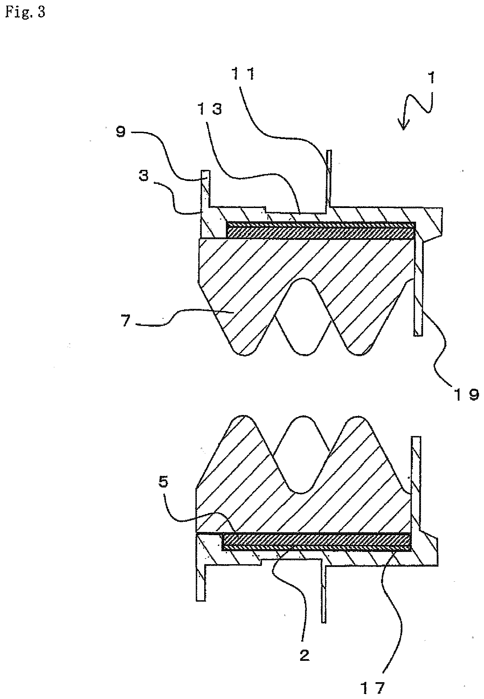

Hereinafter, some embodiments of the present invention will be described in detail. FIG. 1 is an exploded perspective view showing a firestopping member 1 according to the present invention, FIG. 2 is an assembled perspective view of the firestopping member 1 viewed from its rear side, and FIG. 3 is a cross sectional view of the firestopping member 1. The firestopping member 1 is mainly composed of a main body portion 3, a metal member 2, a thermally expandable member 5, an elastic body 7, and so forth.

The main body portion 3 is formed of fire-retardant rubber, for example. That is, the main body portion 3 elastically deforms easily. An outer shape of the main body portion 3 is substantially circular and the main body portion 3 is in a substantially cylindrical shape as a whole. A flange portion 9 protruding outward is formed on an outer periphery of a first opening side of the main body portion 3. Also, a plurality of tongue-shaped pieces 19 are formed directing toward a center direction of the main body portion 3 on an inner surface of proximity of an end portion of a second opening side of the main body portion 3.

The tongue-shaped pieces 19 are formed from the inner surface of the main body portion 3 toward the center direction, and each of the tongue-shaped pieces 19 can deform easily. The plurality of the tongue-shaped pieces 19 almost cover the second opening portion of the main body portion 3. The tongue-shaped pieces 19 are formed at positions that are slightly shifted (about 5 mm, for example) to an inner side (to the second opening side) of the end portion of the main body portion 3 as shown in the drawing. Forming the tongue-shaped pieces 19 at positions shifted from the end portion of the main body portion 3 can prevent the outer periphery (an edge portion) of the main body portion 3 from collapsing to the inner side when pipes and the like are inserted from a side of the tongue-shaped pieces 19. This enables to support the pipes and the like at a substantial center of the main body portion 3. Also, a base portion of the tongue-shaped pieces 19 is unlikely to receive damage when pipes are inserted from the first opening side.

To suppress damages to the base portion of the tongue-shaped pieces 19, it is preferable that a thickness of the main body portion 3 between forming positions of the tongue-shaped pieces 19 and the end portion of the main body portion 3 (the end portion on the right side in FIG. 3) is larger than thicknesses of the other parts (a thickness of the main body portion 3 where the thermally expandable member 5 is disposed, for example). This can ensure rigidity of the base portion of the tongue-shaped pieces 19. For the same reason, a thickness of a base portion of the flange portion 9 of the main body portion 3 is preferably larger than those of the other parts.

Fin portions 11 are formed at a plurality of positions (four positions, for example) as needed on an outer periphery surface of the main body portion 3. The fin portion 11 is in a substantially triangle shape, protruding outward from the outer periphery surface of the main body portion 3. The fin portions 11 are disposed on the outer periphery surface of the main body portion 3 at predetermined intervals in the circumferential direction of the main body portion 3. That is, in a front view of the main body portion 3, a substantially rectangular shape is formed by connecting the adjacent sides of the four fin portions 11 with lines.

A concave portion 13 is formed on a front side of the fin portion 11 (on a side of the flange portion 9) on the outer periphery surface of the main body portion 3. The concave portion 13 is a thin portion formed in the main body portion 3. The size and depth of the concave portion 13 are set so that the concave portion 13 can contain the fin portion 11 when the fin portion 11 is bent into the concave portion 13. That is, preferably, the size of the concave portion 13 is larger than the size of the fin portion 11, and the depth of the concave portion 13 is larger than the thickness of the fin portion 11.

A thermally expandable member housing 17 is formed on the inner surface side of the main body portion 3. The thermally expandable member housing 17 has a slightly larger inner diameter than other parts of the inner periphery surface of the main body portion 3, and is formed over entire circumference of the inner surface of the main body portion 3. The tongue-shaped pieces 19 mentioned above are formed at an end portion of the thermally expandable member housing 17.

The tongue-shaped pieces 19 formed on one end portion of the thermally expandable member housing 17 can restrict an expansion direction of the thermally expandable member 5 when being expanded. Thus, the thermally expandable member 5 can be expanded efficiently in the axial center direction of the main body portion 3.

The thermally expandable member housing 17 accommodates the thermally expandable member 5, which expands due to heat from fire and the like, and the metal member 2. That is, the thermally expandable member 5 is provided on the inner surface of the main body portion 3, and the metal member 2 is disposed between the main body portion 3 and the thermally expandable member 5. It is preferable that the inner surface of the main body portion 3 and the inner surface of the thermally expandable member 5 are substantially on the same plane. This can reduce roughness of an outer surface of the elastic body 7, which will be described below, and suppress gaps to be generated between the elastic body and the main body portion 3 as well as the thermally expandable member 5.

The metal member 2 is made of aluminum, for example. The metal member 2 is disposed between the main body portion 3 (the thermally expandable member housing 17) and the thermally expandable member 5. That is, the metal member 2 is disposed on an outer surface side of the thermally expandable member 5. It is unnecessary for the metal member 2 to cover the entire outer surface of the thermally expandable member 5, and the metal member 2 may be disposed at least on a part of the outer periphery side of the thermally expandable member 5.

The metal member 2 may also be a metal foil, a metal plate, or a cloth made of metal. Considering the heat conductivity, a metal foil or a metal plate having a thickness of 90 µm or more is preferable. Also, to ensure contact area and close adhesion between the metal member 2 and the thermally expandable member 5, a surface of the metal member 2 may have roughness like a cloth, for example. Considering the cost, weight, and construction efficiency, the thickness of the metal member 2 is preferably 1mm or less.

The metal member 2 serves as a heat conductive portion that conducts heat to the thermally expandable member 5. That is, a heat conductive portion is formed on at least a part of the outer periphery side of the thermally expandable member 5, and when a part of the metal member 2 is heated, the metal member 2 conducts heat along the axial direction and circumferential direction of the main body portion 3. Thus, the heat can be conducted to the entire thermally expandable member 5. As a result, the thermally expandable member 5 can start expanding almost uniformly in a short time.

To obtain such an effect, each of the metal member 2 and the thermally expandable member 5 is preferably disposed continuously as one body in the axial direction and circumferential direction of the main body portion 3. That is, except for split portions that will be described below, each of the metal member 2 and the thermally expandable member 5 is continuous in one body as a whole. For example, with a method disposing a plurality of the thermally expandable members 5 covered by the metal members 2, it is difficult to efficiently conduct heat throughout, and it is also difficult to expand the thermally expandable member 5 uniformly since the thermally expandable members 5 are separated.

The metal member 2 is preferably disposed on only on the outer periphery surface of the thermally expandable member 5. That is, the metal member 2 is preferably disposed only in a direction parallel to the axial direction of the main body portion 3. For example, in FIG. 3, if the metal member 2 is disposed at a side surface portion of either front or rear of the thermally expandable member housing 17, this may interfere with the expansion of the thermally expandable member 5. Also, covering a plurality of surfaces of the thermally expandable member 5 by the metal member 2 impairs manufacturability.

The elastic body 7 is disposed on the inner periphery surface of the main body portion 3 and the thermally expandable member 5 so as to cover the thermally expandable member 5. The elastic body 7 is a urethane-made elastic body, for example, and preferably a heatproof sponge.

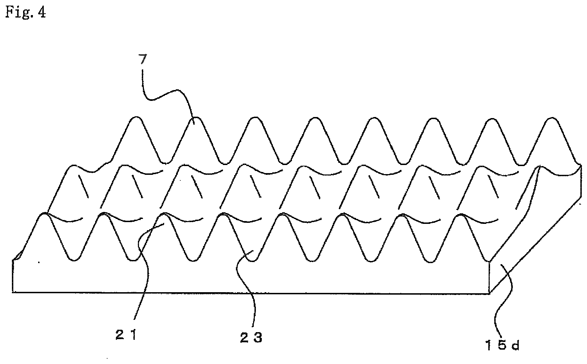

FIG. 4 is a perspective view showing the elastic body 7 before being rolled up. The elastic body 7 is an elastic body having a wavy shape. That is, one surface of the elastic body 7 has mountain parts 21 and valley parts 23 of the wavy shape that are regularly disposed in its width direction as well as in its longitudinal direction that is perpendicular to the width direction. The elastic body 7 is rolled up so that a concave-convex shape formed by the mountain parts 21 and the valley parts 23 becomes an inner surface side.

The elastic body 7 may have other forms than the illustrated one. For example, the inner surface may not have the concave-convex shape, or the mountain parts 21 and the valley parts 23 may be formed continuously in one direction, respectively.

On a side surface of the main body portion 3, a split portion 15a is formed from one end portion to the other end portion. That is, the split portion 15a enables the main body portion 3 to open into a C-shape. Also, band-shaped members of the metal member 2 and the thermally expandable member 5 are rolled up and accommodated inside the thermally expandable member housing 17 of the main body portion 3. At this time, butting portions of the rolled up metal member 2 and the thermally expandable member 5 become split portions 15b and 15c, respectively.

Also, the elastic body 7 is rolled up and accommodated inside the main body portion 3, and its butted portion becomes a split portion 15d. That is, end faces, which become the butted portion when rolling up the elastic body 7, correspond to the split portion 15d. In this way, even if the thermally expandable member 5 and the elastic body 7 are accommodated inside the main body portion 3, the split portions 15a, 15b, 15c, and 15d allow the entire firestopping member 1 to open up into a C-shape.

An assembling method for the firestopping member 1 is, first, to form the thermally expandable member 5 to have a predetermined thickness and cut the thermally expandable member 5 into a band shape so as to fit the width and length of the thermally expandable member housing 17. Next, the band-shaped metal member 2 that has been already cut into the predetermined length and width is adhered to the outer surface of the band-shaped thermally expandable member 5. The metal member 2 and the thermally expandable member 5 are adhered to each other by using adhesive property that the thermally expandable member 5 has.

A layered body obtained as above is accommodated inside the thermally expandable member housing 17 of the main body portion 3. Finally, the elastic body 7 is disposed on the inner surface of the main body portion 3 (the thermally expandable member 5). The elastic body 7 is fixed by using the adhesive property of the thermally expandable member 5. This completes the assembling of the firestopping member 1. The entire thermally expandable member 5 is completely covered by other members and is not exposed. Thus, the thermally expandable member 5 does not receive damage in handling.

Alternatively, a metal sheet may be adhered onto the surface of the thermally expandable member 5 and then both the metal sheet and the thermally expandable member 5 may be cut at the same time into a desirable size. Also, if necessary, an adhesive member may be disposed on the outer surface of the metal member 2 to fix the metal member 2 with the main body portion 3.

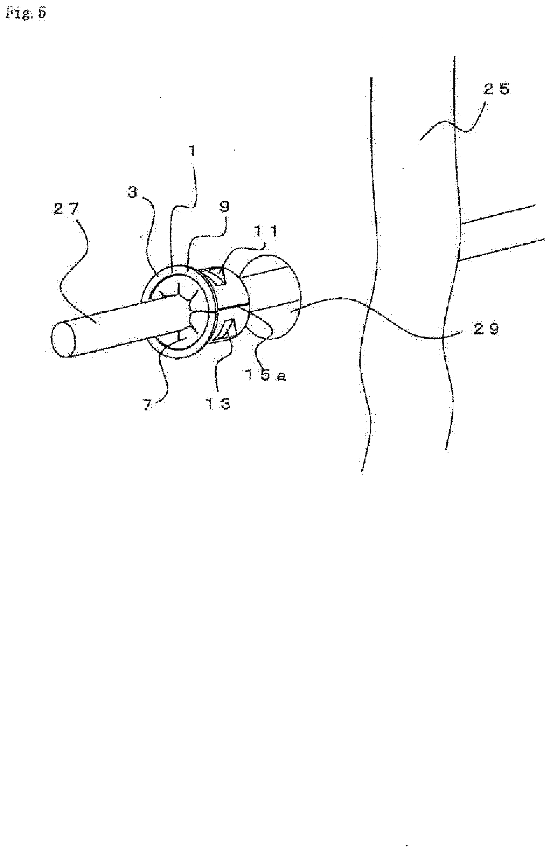

Next, a method for constructing a fireproof structure using the firestopping member 1 will be described. FIG. 5 is a view showing a state before the firestopping member 1 is installed on a partitioning portion 25. First, as shown in FIG. 5, a through hole 29 is formed in the partitioning portion 25, which is a fireproof partitioning portion. The partitioning portion 25 is, for example, a wall that partitions an inner space of a structure such as a building.

Next, a long body 27 is inserted into the through hole 29. The long body 27 is a cable or a pipe, for example. A plurality of the long bodies may also be inserted. Also, the through hole 29 has a shape corresponding to an outer shape of the main body portion 3 of the firestopping member 1. In the illustrated example, the through hole 29 is in a substantially circular shape.

Next, the firestopping member 1 is attached to the long body 27. As mentioned above, the main body portion 3, the metal member 2, the thermally expandable member 5, and the elastic body 7 of the firestopping member 1 are provided with split portions 15a, 15b, 15c, and 15d, respectively. Thus, by aligning all the positions of the split portions 15a, 15b, 15c, and 15d in a circumferential direction and opening these split portions, the firestopping member 1 can be attached to an outer periphery of the long body 27 easily from a side of the long body 27.

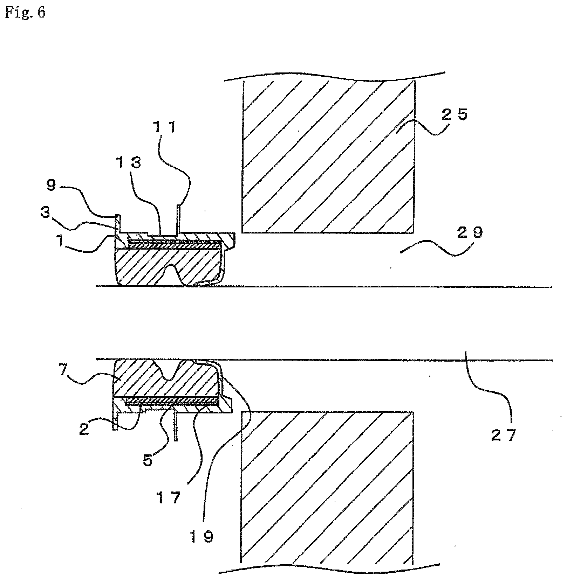

FIG. 6 is a cross sectional view of this state. As mentioned above, the concave-convex shape is formed on the inner surface side of the elastic body 7. The mountain parts 21 of the concave-convex shape crush easily when being in contact with the long body 27. Thus, the same firestopping member 1 can be used for a different outer diameter or different number of the long body 27.

Also, the long body 27 is in contact with a part of the mountain parts 21 of the elastic body 7, being supported by the mountain parts 21. That is, an outer periphery surface of the long body 27 does not adhere uniformly with an entire surface of the inner surface of the elastic body 7 but is supported by a part of the inner surface of the elastic body 7. For this reason, the long body 27 and the elastic body 7 slide over each other smoothly.

Also, the tongue-shaped piece 19 of the main body portion 3 bends along the long body 27. Thus, a tip end side of the tongue-shaped piece 19 comes into a close contact with the outer periphery surface of the long body 27 penetrating the main body portion 3. As mentioned above, the concave-convex shape is formed on the inner surface of the elastic body 7 and there is a possibility that gaps are generated between the outer periphery surface of the long body 27 and the elastic body 7. Even if there are such gaps generated, the tongue-shaped pieces 19 serve as a screen between front and rear surface sides of the partitioning portion 25.

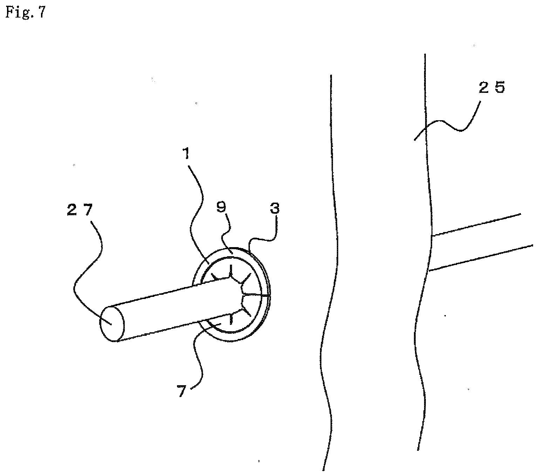

Next, as shown in FIG. 7, the firestopping member 1 is moved along the long body 27, and the main body portion 3 is inserted into the through hole 29. Here, an outer diameter of the flange portion 9 is sufficiently larger than an inner diameter of the through hole 29. Thus, the firestopping member 1 is inserted into the through hole 29 until the flange portion 9 comes into contact with a front surface of the partitioning portion 25, and thus a constant insertion margin for the firestopping member 1 can be maintained.

Here, the inner diameter of the through hole 29 is substantially equal to or slightly smaller than an outer diameter of the main body portion 3. Also, the main body portion 3 is made of rubber and can be easily deformed. Thus, the outer periphery surface of the main body portion 3 and the inner surface of the through hole 29 can be in close contact with each other. Also, since the main body portion 3 is made of rubber, in an event of a fire, the main body portion 3 burns down in a predetermined time and the thermally expandable member 5 can block the through hole 29. If the main body portion is made of metal, for example, the main body portion remains in the event of a fire and it is difficult to block an outer part of the main body portion with certainty. When the thermally expandable member 5 expands, the metal member 2 is easily pushed open and does not interfere with blocking of the through hole.

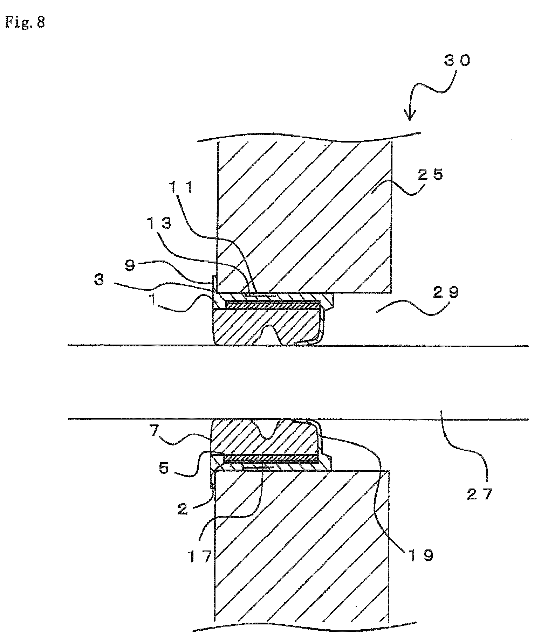

FIG. 8 is a cross sectional view of this state. As mentioned above, the fin portion 11 is formed on the outer periphery surface of the main body portion 3. The fin portion 11 can be easily deformed. Thus, the fin portion 11 that comes into contact with the inner surface of the through hole 29 bends along the outer periphery surface of the main body portion 3. At this time, there is the concave portion 13 formed in front of the fin portion 11. Thus, the bent fin portion 11 is contained inside the concave portion 13. Thus, the fin portion 11 does not interfere with the insertion of the main body portion 3 into the through hole 29.

Also, the fin portion 11 serves as a barb portion formed on the outer periphery surface of the main body portion 3, preventing the main body portion 3 from coming out of the through hole 29. The number of the disposed fin portions 11 may be six instead of four, for example, or may be any number as long as a plurality of the fin portions 11 are disposed at regular intervals.

As above, the fireproof structure 30 having the long body 27, which is inserted through the through hole 29, and the firestopping member 1, which is provided in the through hole 29, can be constructed. In this state, the tongue-shaped pieces 19 deform and fall toward the inside of the main body portion 3. This can suppress the thermally expandable member 5 from expanding outside of the main body portion 3. At this time, as mentioned above, the tongue-shaped pieces 19 are disposed at positions shifted from the end portion of the main body portion 3, and the base portion of the tongue-shaped pieces 19 (the base portion on the side of the end portion of the main body portion 3) is thick. This can suppress deformation of the end portion of the main body portion 3 caused by the deformation of the tongue-shaped pieces 19, improving rigidity of the side of the main body portion 3, which is pulled and deformed by the tongue-shaped pieces 19, and, consequently, damage to the tongue-shaped pieces 19 and the like can be suppressed.

To avoid stress concentration on the base portion of the tongue-shaped pieces 19, it is preferable to change the thickness of the base portion of the tongue-shaped pieces 19 (the base portion on the end portion side of the main body portion 3) in a tapered shape. That is, as shown in FIG. 3, it is preferable to form the inner diameter of the main body portion 3 in a tapered shape so that, when the tongue-shaped pieces 19 are not deformed, the inner diameter increases gradually from the base portion of the tongue-shaped pieces 19 to the end portion of the main body portion 3.

It is also possible to install the firestopping member 1 on a substantially rectangular through hole. In such a case, the firestopping member 1 is disposed at the through hole so that the fin portions 11 are positioned to corner portions of a through hole 29a and a substantially rectangular shape formed by connecting the four fin portions 11 corresponds to the substantially rectangular shape of the through hole 29a.

From this state, a calking material is poured from proximity of the corner portions of the through hole 29a (parts where there are gaps between the flange portion 9 and the through hole 29a) into the through hole 29a. At this time, the fin portions 11 can suppress the calking material from flowing into the rear side of the partitioning portion 25.

As described above, the firestopping member 1 according to the present invention can easily provide the fireproof structure 30 without using mortar or the like. Also, the split portions 15a, 15b, 15c, and 15d enable the firestopping member 1 to be installed from the side of the long body 27, and thus the firestopping member 1 can also be easily attached to the long body 27 that has already been inserted into the through hole.

Also, since the metal member 2 as a heat conductive portion is disposed on the outer periphery portion of the thermally expandable member 5, it is possible to suppress local expansion of the thermally expandable member 5 and the time lag of the starting of expansion at different positions. For this reason, the thermally expandable member 5 can expand almost uniformly as a whole and falling or the like of a part of the thermally expandable member 5 can be suppressed. Such effects are noticeable if a width of the thermally expandable member 5 (a length in the axial direction of the main body portion 3) is larger, and it is particularly effective if the width of the thermally expandable member 5 is 50 mm or more, for example.

At this time, since the metal member 2 is disposed only on the outer periphery side of the thermally expandable member 5, the metal member 2 does not interfere with the expansion of the thermally expandable member 5.

Also, the elastic body 7 is disposed inside the main body portion 3, and the elastic body 7 easily crushes depending on the outer diameter of the long body 27. Thus, one firestopping member 1 can be applied to a plurality of diameters of the long body 27.

Also, the thermally expandable member 5 and the long body 27 are not in direct contact with each other, and the long body 27 is in contact with the elastic body 7. Thus, the long body 27 and the elastic body 7 can slide over each other smoothly, and this can prevent shifting of the firestopping member 1 if the long body 27 moves in its longitudinal direction.

In particular, the inner surface of the elastic body 7 has the concave-convex shape, and the mountain portions 21 support the long body 27. Also, when the mountain part 21 crushes in contact with the long body 27, the deformed part of the mountain portion 21 can be released to the valley portion 23 side. For this reason, compared to a case in which the elastic body is uniformly in close contact with the entire surface of the outer periphery surface of the long body 27, the long body 27 receives less repulsive force from the elastic body 7. Thus, friction between the long body 27 and the elastic body 7 is smaller. As a result, when the long body 27 moves in the longitudinal direction, it is possible to suppress falling of the elastic body 7 with the movement of the long body 27.

Also, although the concave-convex shape of the elastic body 7 may cause to generate gaps between the long body 27 and the elastic body 7, the tongue-shaped pieces 19 almost block one of the opening portions of the main body portion 3 when the long body 27 penetrates the main body portion. Thus, the tongue-shaped pieces 19 can serve as a screen between the front and rear faces of the partitioning portion 25. At this time, the tongue-shaped pieces 19 can easily deform and do not interfere with the insertion of the long body 27 into the main body portion 3.

Also, forming the tongue-shaped pieces 19 at positions shifted from the end portion and increasing the thickness of the base portion of the tongue-shaped pieces 19 (the base portion on the end portion side of the main body portion 3) can suppress deformation of the main body portion 3 when the tongue-shaped pieces 19 are deformed, suppressing damage to the tongue-shaped pieces 19.

Also, although the above construction method shows an example in which the long body 27 is inserted into the through hole in advance, the firestopping member 1 may be installed onto the through hole first and then the long body 27 may be inserted through the firestopping member 1.

Also, in the example shown above, the partitioning portion 25 is a wall. However, the partitioning portion 25 may also be a floor (a ceiling). In such a case, falling of the firestopping member 1 can be suppressed by disposing the firestopping member 1 so that the flange portion 9 is on an upper side.

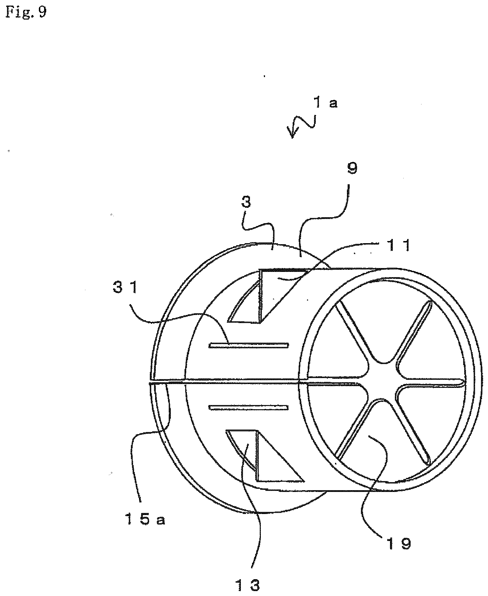

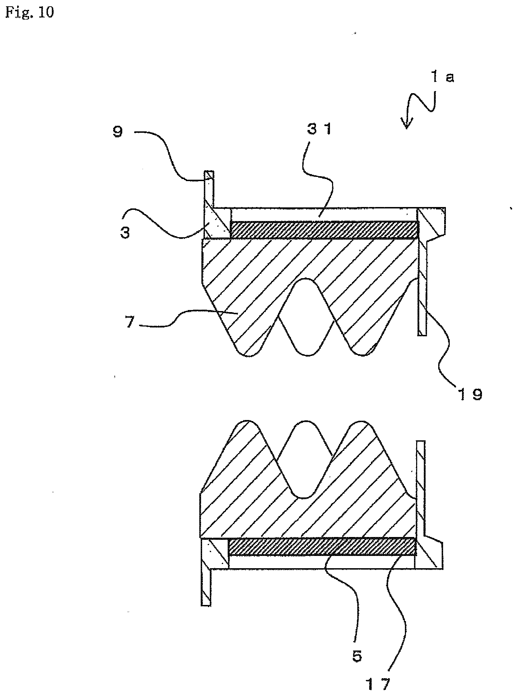

Next, a second embodiment will be described. FIG. 9 is a rear perspective view showing a firestopping member 1a according to the second embodiment, and FIG. 10 is a cross sectional view thereof. In the descriptions below, structures having the same functions as the firestopping member 1 will have the same notations as in FIG. 1 to FIG. 8 and redundant descriptions will be omitted.

The firestopping member 1a has approximately the same structure as the firestopping member 1 except that a slit 31 is formed instead of the metal member 2. The slit 31 is formed at a plurality of positions at predetermined intervals in the circumferential direction of the main body portion 3. The slit 31 is formed to have a predetermined length along the axial direction of the main body portion 3. For example, as shown in FIG. 10, the slit 31 is formed so as to correspond to the length of the thermally expandable member housing 17.

The slit 31 penetrates the main body portion 3. Thus, the slit 31 exposes a part of the thermally expandable member 5 to the outside of the main body portion 3. Thus, heat from the outside can be efficiently conducted to the thermally expandable member 5. That is, the slit 31 can serve as a heat conductive portion.

When being expanded, the thermally expandable member 5 comes into direct contact with an inner surface of the through hole outside through the slit 31. For example, since there is no residue of the main body portion 3 remaining between the thermally expandable member 5 and the inner surface of the through hole, the thermally expandable member 5 and the inner surface of the through hole can be fixed and adhered with each other more firmly, which can prevent falling of the thermally expandable member 5.

According to the second embodiment, the same effects as in the first embodiment can be obtained. Providing such structure that can conduct heat more uniformly to the entire thermally expandable member 5 on the outer periphery surface of the thermally expandable member 5 can expand the thermally expandable member 5 uniformly.

Although the embodiments of the present invention have been described referring to the attached drawings, the technical scope of the present invention is not limited to the embodiments described above. It is obvious that persons skilled in the art can think out various examples of changes or modifications within the scope of the technical idea disclosed in the claims, and it will be understood that they naturally belong to the technical scope of the present invention.

### DESCRIPTION OF NOTATIONS

- 1, 1a: firestopping member
- 2: metal member
- 3: main body portion
- 5: thermally expandable member
- 7: elastic body
- 9: flange portion
- 11: fin portion
- 13: concave portion
- 15a, 15b, 15c, 15d: split portion
- 17: thermally expandable member housing
- 19: tongue-shaped piece
- 21: mountain portion
- 23: valley portion
- 25: partitioning portion
- 27: long body
- 29, 29a: through hole
- 30: fireproof structure
- 31: slit
- 100: fireproof structure
- 101: partitioning portion
- 103: through hole
- 105: mortar
- 107: thermally expandable body
- 109: long body

## Claims

1. A firestopping member comprising:
a main body portion having a substantially cylindrical shape;
a thermally expandable member provided on an inner surface of the main body portion; and
an elastic body provided on inner periphery surfaces of the main body portion and the thermally expandable member so as to spread over the thermally expandable member, wherein
a heat conductive portion is formed at least on a part of an outer periphery side of the thermally expandable member.

2. The firestopping member according to claim 1, wherein
the heat conductive portion is a metal member; and
the metal member is disposed between the main body portion and the thermally expandable member.

3. The firestopping member according to claim 2, wherein
the metal member is disposed only on an outer surface side of the thermally expandable member; and
the metal member is disposed continuously as one body in an axial direction and in a circumferential direction of the main body portion.

4. The firestopping member according to claim 1, wherein
the heat conductive portion is a slit; and
the slit is formed at a part of the main body portion, which is an outer periphery part of the thermally expandable member.

5. The firestopping member according to claim 1, wherein
a plurality of deformable tongue-shaped pieces are provided in proximity of one end portion of the main body portion, the tongue-shaped pieces being provided at positions shifted from the end portion of the main body portion directing from the inner surface of the main body portion toward a center direction; and
a thickness of the main body portion between forming positions of the tongue-shaped pieces and the one end portion of the main body portion is larger than the thicknesses of other parts.

6. The firestopping member according to claim 5, wherein
a thermally expandable member housing is formed over an entire circumference of the inner surface of the main body portion, the thermally expandable member housing having an inner diameter that is larger than thicknesses of the other parts;
the thermally expandable member housing accommodates the thermally expandable member; and
the tongue-shaped pieces are formed on one end portion of the thermally expandable member housing.

7. The firestopping member according to claim 1, wherein
the main body portion is made of rubber; and
the elastic body is a sponge.
